# EUROPEAN PATENT SPECIFICATION

(11) **EP 2 156 071 B1**
(45) Date of publication and mention of the grant of the patent: **20.04.2011**
(21) Application number: 08750961.8
(22) Date of filing: 16.05.2008
(51) Int. Cl.: F16H 47/04

(54) **TRANSMISSIONS**
GETRIEBE
TRANSMISSIONS

(30) Priority: 19.05.2007 GB 0709635
(43) Date of publication of application: 24.02.2010
(73) Proprietor: Valtra Inc, 44201 Suolahti (FI)
(72) Inventor: RUOKOLA, Timo, FIN-40520 Jyväskylä (FI)
(74) Representative: Morrall, Roger
(86) International application number: PCT/IB2008/001222
(87) International publication number: WO 2008/142523

(56) References cited:
- GB-A- 1 429 294
- US-A- 4 754 664
- US-A- 5 890 982
- US-A1- 2002 045 511
- US-A1- 2002 169 048
- US-A1- 2006 247 086

## Description

This invention relates to a method of operating a transmission, in particular a so-called Continuously Variable Transmission (CVT) in which the operative ratio of the transmission can be varied continuously as opposed to being variable in a series of discrete steps. GB-A-1 429 294 constitute the closest priort art to the subject-matter of independent claim 1.

Transmissions, particularly those employed in tractors, are often required for many different applications, each demanding different output characteristics. For example, for one application a tractor may be required to operate at very low speed but with very high torque.

In another application a high speed and low torque may be required. In yet another application a continuously variable output may be desired. The mechanics of a CVT are not always suitable for very high torque applications however.

Thus, it is an object of the present invention to provide an improved method of operating a power-branched CVT which provides a high torque output.

According to a first aspect of the present invention there is provided a method of operating a power-branched transmission which comprises:
an input shaft and an output shaft,
an epicyclic gearing having first, second and third gear elements each being connected to either the input shaft or the output shaft, wherein the input shaft and the output shaft are each connected to at least one of the first, second and third gear elements;
a drive connection between a fourth gear element of the epicyclic and the input shaft, the connection serving to drive the fourth gear element from the input shaft in a continuously variable manner to provide a CVT;
two hydraulically operated clutches which are driven from a common shaft and are each connected to respective ones of the first, second and third gear elements,
   wherein the method comprises simultaneously engaging the two clutches to provide a direct driving relationship between the input shaft and the output shaft whilst disconnecting the drive connection;
   characterised in that the epicyclic comprises two compound planets which co-rotate in unison at all times, the planets forming the first and second gear elements, acting as inputs to the epicyclic and engaging respective sun gears on the input shaft, wherein the two clutches are alternatively engageable to drive the planets via their respective sun gear from the input shaft.

By locking together two elements of the epicyclic and locking out the continuously variable connection, a direct 1:1 relationship is established between the input shaft and the output shaft. When fitted to a tractor, a transmission operated in accordance with the invention allows the driver to advantageously select a high torque mode which is particularly suitable for high torque applications such as ploughing.

In a first preferred embodiment the epicyclic gearing further comprises a third compound planet forming the third gear element, acting as the output and engaging a respective sun gear on the output shaft, the epicyclic further comprising a carrier for the planets forming the fourth gear element.

In a second preferred embodiment the epicyclic gearing further comprises a carrier for the planets forming the third gear element, connected to the output shaft, and an annulus gear forming the fourth gear element.

The continuously variable drive connection is preferably a variable hydraulic pump/motor circuit. In order to allow the fourth gear element to rotate freely in the 'high torque mode' the drive connection can be disconnected using a number of methods.

For the purposes of the present invention, the expression 'disconnecting the drive connection' should be understood to mean any means by which the fourth gear element is allowed to rotate freely such that no loading exists over the drive connection. By way of example, the drive connection can be 'disconnected' by controlling the speed of a hydraulic motor so that the output thereof rotates in sync with the fourth gear element and no torque is experienced across the connection.

A bypass valve may instead be provided in the circuit and wherein said step of disconnecting the drive connection includes opening the bypass valve which serves to open the hydraulic connection between pressure lines connecting the pump and the motor, i.e. to put the pump/motor on open bypass.

Alternatively, the continuously variable drive connection may be a variable ratio mechanical drive or a variable ratio electrical generator/motor combination.

The present invention will now be described, by way of example only, with reference to the accompanying drawings in which :-
Figure 1 shows diagrammatically the layout of a CVT form of a modular transmission operable in accordance with the present invention;
Figure 2 is a schematic perspective view of a transmission module in a CVT arrangement operable in accordance with the present invention shown with the universal end flange removed;
Figure 3 is a sectional view of the universal end flange of the module of Figure 2;
Figure 4 shows diagrammatically the transmission of Figure 1 modified into a live speed power shift transmission;
Figure 5 is a schematic perspective view of a transmission module in a multi-ratio powershift transmission arrangement in accordance with the present invention shown with the universal end flange removed;
Figure 6 is a sectional view of the universal end flange of the module of Figure 5;
Figure 7 shows a tabular summary of the engagement sequence of the clutches of the epicyclic powershift unit of figure 4;
Figure 8 shows diagrammatically the transmission of figure 1 modified into a seven speed epicyclic powershift transmission, and;
Figure 9 shows a tabular summary of the engagement sequence of the clutches of the epicyclic powershift unit of figure 8;
Figure 10 shows diagrammatically the transmission of figure 1 modified into a nine speed epicyclic powershift transmission;
Figure 11 shows a tabular summary of the engagement sequence of the clutches of the epicyclic powershift unit of figure 10;
Figure 12 shows a different form of epicyclic gear operating as a CVT;
Figure 13 shows the transmission of Figure 12 modified into a powershift unit; and,
Figure 14 shows a different form of epicyclic gear operating as a CVT operable in accordance with the present invention.

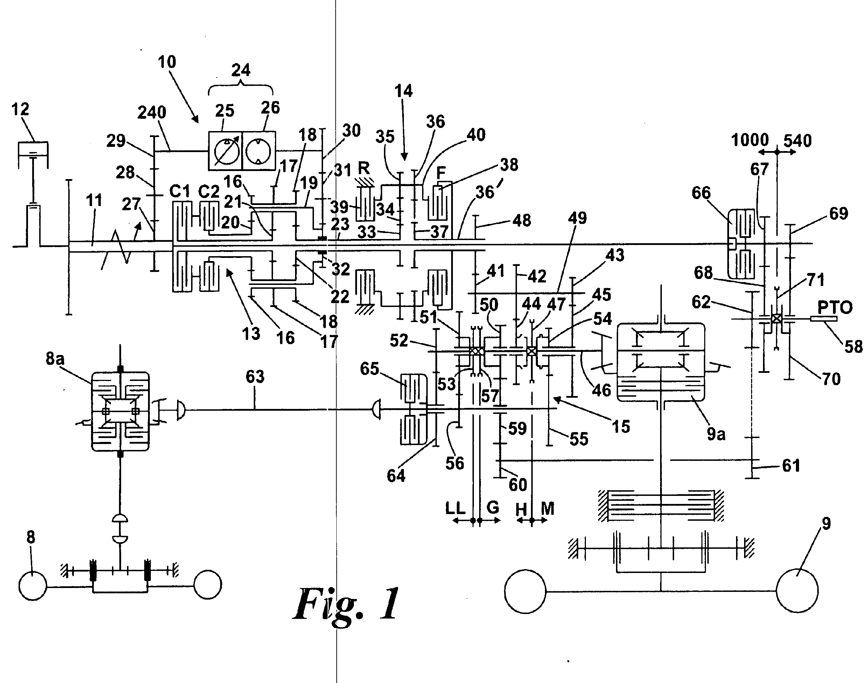

Referring to Figure 1, a power-branched transmission module 10 of a tractor has an input shaft 11 driven from an engine 12. The input shaft drives an epicyclic gear 13, a forward/reverse shuttle stage 14 and an further selectively engageable gear train 15 all in series. Gear train 15 in turn drives the front and rear wheels 8 and 9 via differentials 8a and 9a respectively.

The epicyclic gear 13 has three compound planets gears 16, 17, and 18 which rotate in unison at all times and are supported from a common carrier 19. Planets 16 and 17 engage sun gears 20 and 21 respectively which can be coupled with input shaft 11 via clutches C2 and C1 respectively. The third planet gear 18 engages a sun gear 22 mounted on an output shalt 23 of the epicyclic gear which is connected with the shuttle stage 14.

A hydraulic pump/motor loop 24, which includes a variable displacement pump 25 connected with a motor 26, drives the planet carrier 19 from the input shalt 11 via gears 27, 28, 29, 30, 31, 32. The pump 25 is mounted on a shaft 240 which is driven by gear 29 mounted thereto.

The epicyclic gear 13 is designed to provide a continuous variation of ratio from a geared neutral condition in which the output shaft 23 is not rotating up to a ratio of say 2.2 :1 or 2.6:1 as follows. Initially clutch C1 is engaged which drives sun 21 from the input shaft 11 and the carrier is driven by the pump/motor loop 24 at speeds varying from the maximum negative speed of rotation of the carrier (i.e. with the carrier rotating at its maximum speed in the opposite direction to the direction of rotation of the engine), when the geared neutral condition exists, up to the maximum positive speed of the carrier (i.e. with the carrier rotating at its maximum speed in the same direction as the engine). This provides a ratio range of 0 to 1.

The clutch C2 is then engaged which drives sun 20 from the input shaft 11 and carrier 19 is driven by the pump/motor loop 24 from the maximum positive speed of rotation of the carrier to the maximum negative speed of rotation of the carrier. This provides the ratio range of 1 to 2.2.

The epicyclic forward/reverse shuttle 14 has a sun gear 33 on shaft 23 and a sun gear 37 on the output shaft 36'. Planet gears 35 and 36 are mounted on a carrier 40 and a reverse idler 34 connects gears 33 and 35. Gears 36 and 37 also mesh without the use of an idler. Forward drive is engaged by engaging clutch 38 which locks the carrier 40 to the shaft 36'. Reverse is engaged by engaging clutch 39 which locks the carrier 40 to the transmission housing.

Shaft 36' drives the further gear train 15 which is configured to give the required overall ratio range of the tractor. In the arrangement shown gears 41, 42, and 43 rotate with a shaft 49. Gear 41 meshes with gear 48 on shaft 36' to drive shaft 49 and gears 42 and 43 mesh with gears 44 and 45 and can be coupled to a differential pinion shaft 46 by a sliding coupler 47 (see arrow H) to provide a high gear train to shaft 46 via gears 42 and 44, which is used principally for road work and a low gear train (see arrow M) via gears 43 and 45 which provides maximum tractive force and is used principally for field work.

Gears 50 and 51 also surround shaft 46. Gear 51 can be coupled to shaft 46 (see arrow LL) using sliding coupler 53 to engage an even lower gear train via gears 43, 45, 54, 55, 56, and 51. If sliding coupler 57 is used to couple gear 50 to shaft 46 (see arrow G) the PTO shaft 58 is driven via gear train 50, 59, 60, 61 and 62 at a speed proportional to the ground speed of the tractor.

Gear 52 on shaft 46 drives the front wheel drive shaft 63 via gear 64 and front wheel drive clutch 65. PTO shaft 58 can be driven from the input shaft 11 via a hydraulic clutch 66 and either gear train 67, 68 or 69, 70 using sliding coupler 71. Gear train 67, 68 gives a PTO shaft speed of 1000 r.p.m. at a specified engine speed whereas gear train 69, 70 gives a PTO shaft speed of 540 r.p.m. at the specified speed.

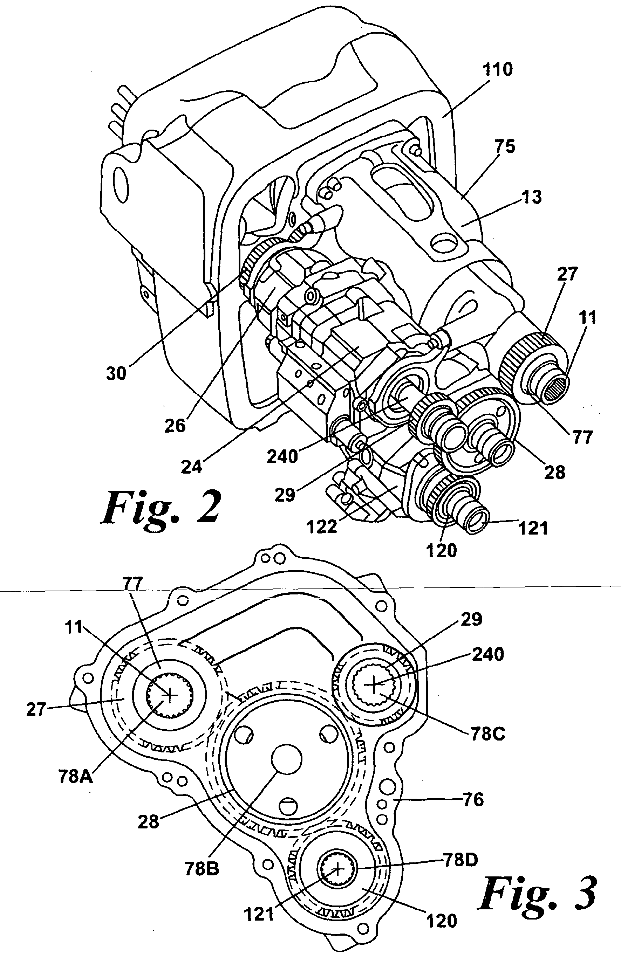

With reference to Figures 2 and 3 the transmission module 10 comprises a housing 75 which includes a universal end flange 76 at the forward end of the vehicle. The module 10 itself is housed within the chassis of a tractor 110. Input shaft 11 is supported by a bearing 77 located at one of a plurality of shaft support points 78A, 78B, 78C and 78D, provided by the universal end flange 76 which is bolted to the main housing 75.

The hydraulic pump/motor loop 24 is mounted on and driven by shaft 240. This component is added to the rest of the module 10 towards the end of the assembly line through an access hatch (not shown) provided in the chassis frame 110.

The output of the motor 26 drives gear 30 which drives the planet carrier 19.

Figure 3 shows the four shaft support points 78A, 78B, 78C and 78D on the inside surface of the universal end flange 76 serving to support shafts for gears 27, 28 and 29. From here it can be seen that shaft 240 for the pump/motor loop 24 is driven by input shaft 11 via gears 27, 28 and 29 all supported by the universal end flange 76. Gear 27 has a width, or thickness, that is substantially greater, for example twice the thickness, than that of gear 28 for reasons that will become apparent below.

Gear 120 is meshed with gear 28 and is drivably mounted on shaft 121 which is supported by shaft support 78D. An auxiliary hydraulic pump 122 is driven by shaft 121 and is employed to operate auxiliary hydraulic functions of the tractor.

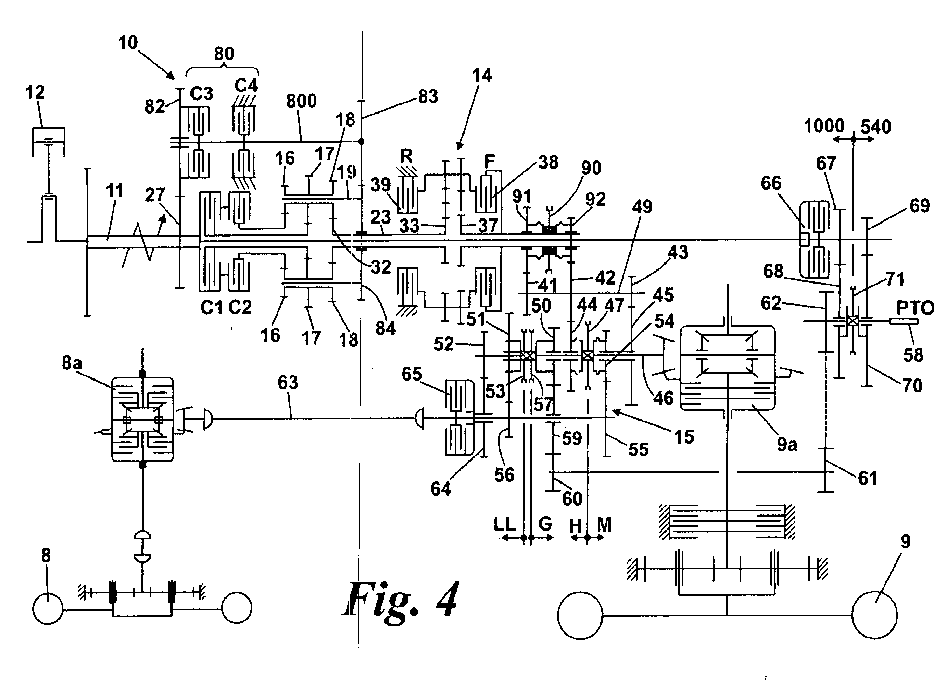

The assembly of the CVT arrangement shown in Figures 1, 2 and 3 can easily be modified to instead provide a five speed multi-ratio powershift transmission of the form shown in Figures 4, 5 and 6.

As can be seen from Figure 4, the main difference from the CVT module 10 of Figures 1, 2 and 3 is that the hydraulic pump loop 24 is replaced by a mechanical gear loop 80 which drives carrier 19 from input shaft 11 via gears 27, 82, 83, and 84 using clutch C3 and which holds the carrier 19 stationary using clutch C4.

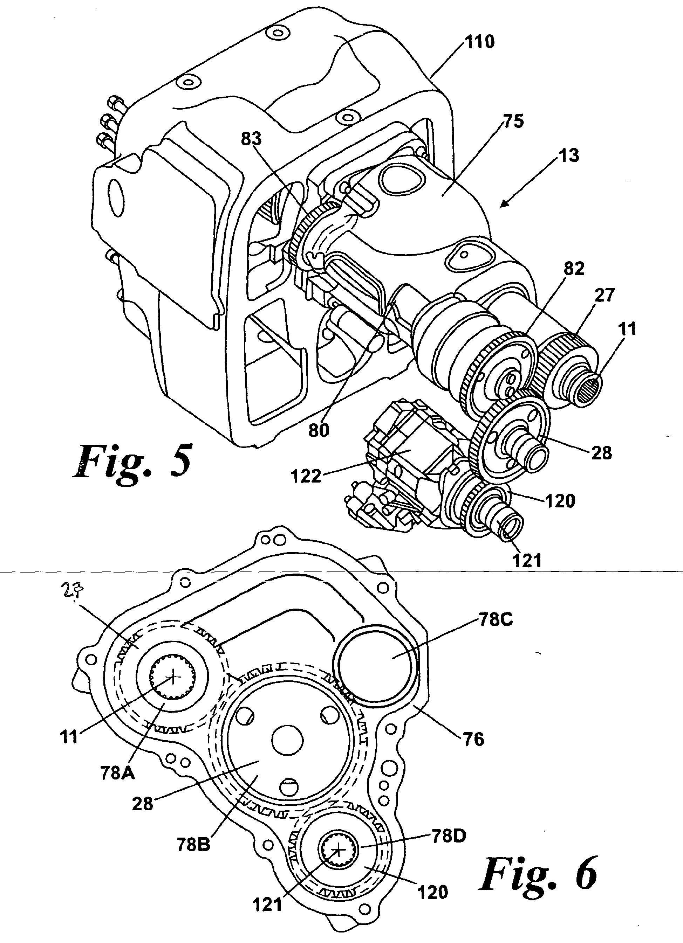

The universal end flange 76 is selectively configurable to both the CVT and powershift transmission arrangements. In the latter arrangement the mechanical gear loop 80 is mounted on shaft 800 which is driven by gear 82. As can be seen from Figure 5, gear 82 meshes with gear 27 and overlaps with gear 28 which remains in place to drive the hydraulic pump 122 (common to both arrangements). Thus shaft support 78C is left redundant in this arrangement (Fig. 6).

The position of the input shaft 11 is common to both arrangements shown in Figures 2 and 5. Furthermore, gear 27 is a common component in both arrangements wherein a proportion of the thickness thereof is redundant in the CVT arrangement.

By providing an end flange 76 which can accommodate a number of different shaft support configurations, the same component can be employed regardless of the final drive line required, and thereby allows a common assembly process for more parts of the transmission.

Although a universal end flange 76 has been used in the embodiments described thus far, it should be appreciated that a flange tailored for the desired arrangement could instead be used without deviating from the scope of the invention. Furthermore, a universal end flange could instead comprise a plurality of shaft support points which are not common to both arrangements.

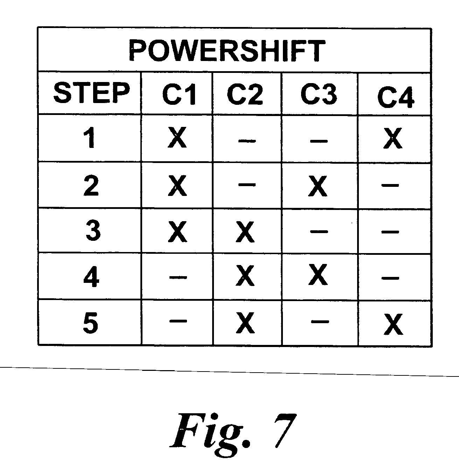

Turning back to the multi-ratio powershift transmission of Figures 4, 5 and 6, Figure 7 shows in tabular form the engagement sequence of the clutches C1, C2, C3 and C4 which gives the five ratios of the powershift provided by the epicyclic 13 and gear loop 80. Thus to engage the first ratio clutches C1 and C4 are actuated and to engage the second ration clutches C1 and C3 are actuated. The third ratio is engaged by actuating clutches C1 and C2 and the fourth ratio is engaged by actuating clutches C2 and C3. The fifth ratio is engaged by actuating clutches C2 and C4.

Also additional sliding coupler 90 is provided so that shaft 49 can be driven either via gears 91 and 41 or via gears 92 and 42 thus doubling the number of ratios which the further gear train 15 can provide.

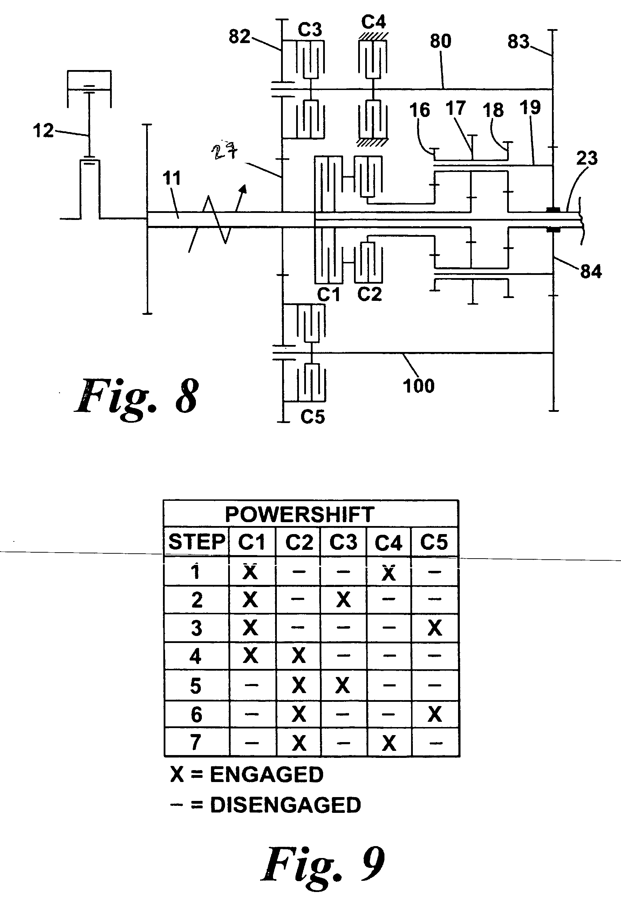

Figure 8 shows a further form of powershift transmission in which the live speed epicyclic unit of Figure 2 is replaced by a seven speed epicyclic unit by the addition of a further mechanical loop 100 extending between the input shaft 11 and the planet carrier 19 which includes an additional clutch C5. Figure 9 shows in tabular form the engagement sequence of clutches C1, C2, C3, C4 and C5 which provides the seven ratios of the epicyclic powershift unit.

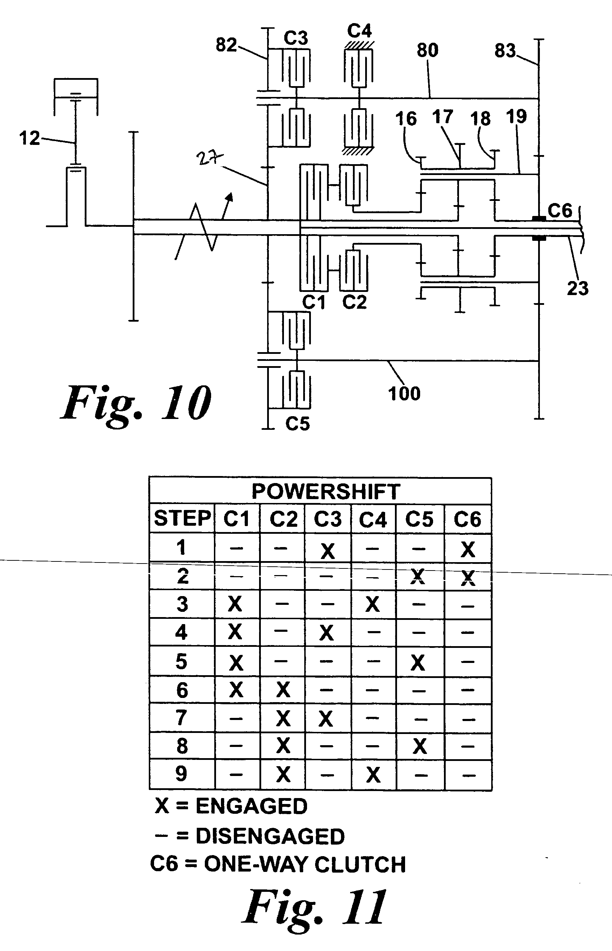

A still further form of powershift transmission is shown in Figure 10 where a one-way clutch C6 is added between the planet carrier 19 and the output shaft 23. In this arrangement when clutch C3 is engaged the output shaft 23 can be driven via gear loop 80 by clutch C6 and similarly when clutch C5 is engaged the output shaft can be driven via gear loop 100 by clutch C6 to provide a nine speed epicyclic unit. Figure 11 shows in tabular form the engagement sequence of all the clutches C1 to C6 to provide the nine ratios.

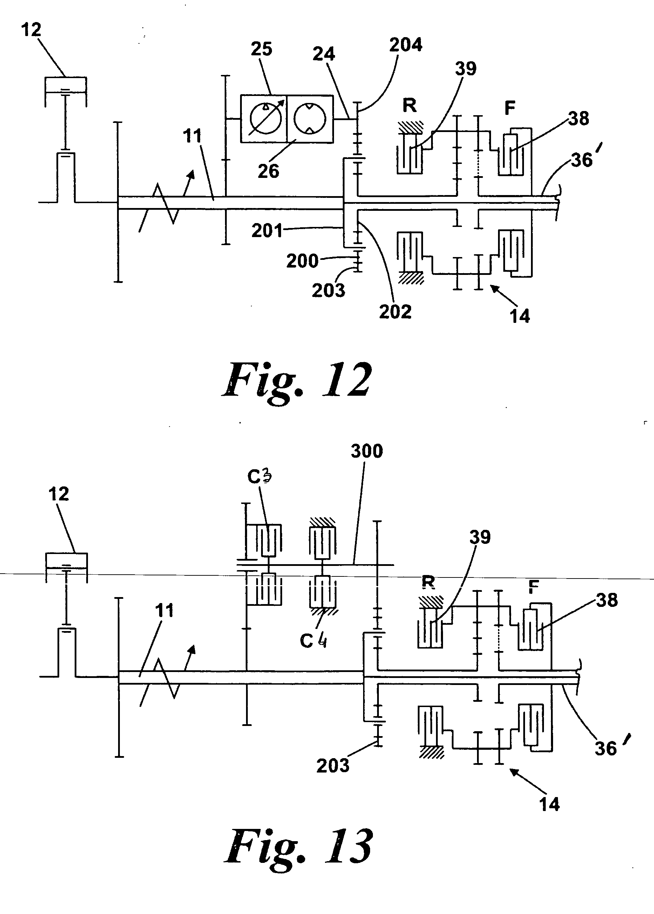

The concept of a modular transmission which can be assembled into alternative drive lines is applicable to other types of epicyclic gears. For example, the epicyclic CVT unit 10 of Figure 1 which uses the compound planet gears 16, 17 and 18 can be replaced with a CVT in the form of a sun, planet and annulus gear as shown in Figure 12 in which planet gears 200 are carried on a carrier 201 which is driven from input shaft 11. Planets 200 mesh with a sun gear 202 which drives output shaft 23 and also mesh with an annulus gear 203 which is driven from motor 26 via gear 204.

The CVT arrangement shown in Figure 12 can be converted to the powershift arrangement shown in Figure 13 by replacing the pump and motor loop 24 by the gear loop 300 which includes a clutch C3 which when engaged drive annulus gear 203 to provide a first ratio and a clutch C4 which when alternatively engaged holds the annulus gear 203 stationary to provide a second ratio. The remainder of the transmission is described in relation to Figure 1.

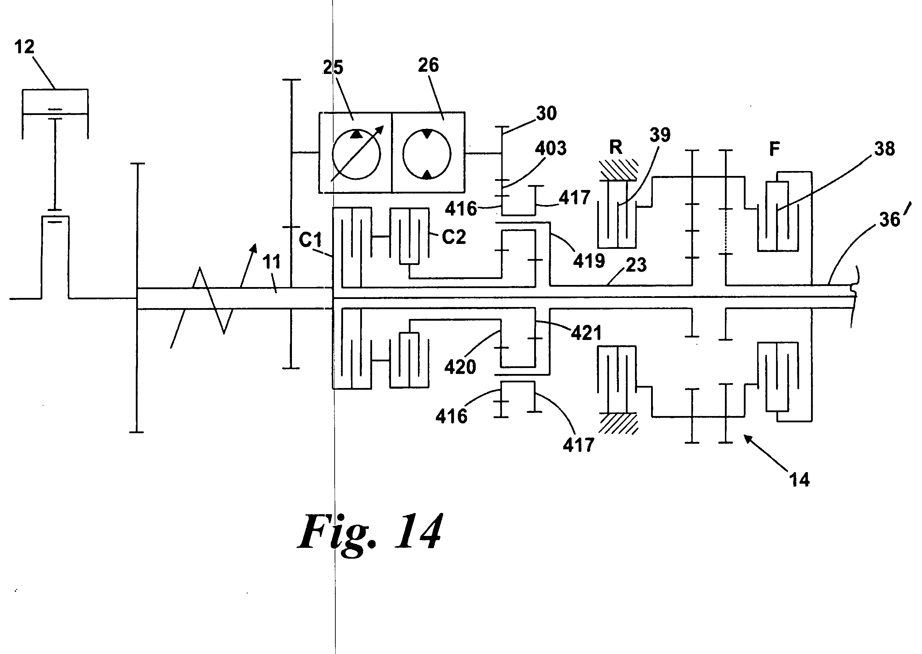

With reference to Figure 14, a further alternative epicyclic gearing arrangement is shown for a CVT. In a similar manner to the embodiment of Figure 1 the transmission comprises two hydraulically operated clutches C1 C2 which are alternatively engageable to drive input planets 416, 417 via their respective sun 420, 421 from the input shaft 11. However, in this embodiment the output shaft 23 is drivably connected to the planet carrier 419. Gear 30, driven by the continuously variable connection 25, 26, meshes with an annulus (or ring) gear 403 which in turn meshes with the planet gears.

In a like manner to the CVT arrangement of Figure 12, the CVT of Figure 14 can be converted to a powershift arrangement by replacing the pump and motor loop 24 by a suitable gear loop.

Thus it will be appreciated that the modular transmission described above allows a tractor manufacturer to provide to his customers with either a CVT as shown, for example, in Figure 1, or a five speed powershift transmission as shown in Figure 4, or seven speed powershift as shown in Figure 8, or a nine speed powershift as shown in Figure 10 which have a high percentage of common components. Similarly the epicyclic CVT of Figure 12 can be modified into the powershift transmission for Figure 13.

Also, when the transmission is configured as a CVT it is possible to provide a high torque mode of operation, in accordance with the present invention, wherein the continuously variable connection is locked out so that shafts 11 and 23 rotate in unison. Such a mode provides a highly efficient driveline which is particularly suitable for high torque applications such as ploughing. By locking together two elements of the epicyclic a direct 1:1 relationship is established between the input shaft 11 and the output shaft 23.

The provision of two clutches, which are otherwise alternatively engageable to drive respective input planets via their respective sun from the input shaft, allows a simple route to locking two epicyclic elements together to provide the high torque mode. For example, the clutches C1 and C2 in the embodiments of Figures 1 and 14 can be simply engaged simultaneously whilst allowing the pump/motor loop 24 to rotate freely. When in the high torque mode the drive can be transmitted from output shaft 23 via gears 48, 41, 43, 45 to shaft 46 and hence to the wheels. Alternatively, road use could be catered for by transmitting drive from shaft 23 via gears 48, 41, 42, 44 to shaft 46.

The continuously variable connection can be allowed to rotate freely by a number of methods. For example, in the case of a variable hydraulic pump/motor circuits as shown in Figures 1 and 14, an open bypass valve can be provided. This serves to open the hydraulic connection between the pressure lines connecting the pump 25 and motor 26.

Alternatively, in the case of a closed loop control system controlling the speed of the hydraulic motor 26, the motor can be made to rotate with the same speed as the locked epicyclic. This results in no power being driven through the hydraulic variator circuit 24. If the pump/motor loop 24 is torque controlled, the control request can be set to zero which results in no load on the shaft 240.

Selection of such a high torque mode can be made by simple depression of a dedicated switch in the tractor cab or automatically by an internal transmission control system.

On the assembly line, a tractor manufacturer can assemble a transmission module as described and stockpile a quantity of them as desired before configuring each of the modules one-by-one into either a CVT arrangement or a powershift transmission arrangement. Advantageously this reduces the time between a customer placing an order for a tractor with a desired transmission and delivery of that tractor.

In summary there is provided method of operating a power-branched transmission having a selectable high torque mode. The transmission comprises an input shaft and an output shaft, an epicyclic gearing having first, second and third gear elements each being connected to either the input shaft or the output shaft, wherein the input shaft and the output shaft are each connected to at least one of the first, second and third gear elements. The transmission further comprises a drive connection between a fourth gear element of the epicyclic and the input shaft, the connection serving to drive the fourth gear element from the input shaft in a continuously variable manner to provide a CVT. The method comprises selectively locking two of the first, second and third gear elements relative to one another to provide a direct driving relationship between the input shaft and the output shaft whilst disconnecting the drive connection. By selectively locking out the CVT part of the transmission in this way, a driver can retrieve a high torque output when required.

## Claims

1. A method of operating a power-branched transmission (10) which comprises:
an input shaft (11) and an output shaft (23),
an epicyclic gearing (13) having first, second and third gear elements (16, 17, 18) each being connectable to either the input shaft or the output shaft, wherein the input shaft and the output shaft are each connectable to at least one of the first, second and third gear elements;
a drive connection (24) between a fourth gear element (19) of the epicyclic gearing and the input shaft, the connection serving to drive the fourth gear element from the input shaft in a continuously variable manner to provide a CVT;
two hydraulically operated clutches (C1, C2) which are drivable from a common shaft and are each connectable to respective ones of the first, second and third gear elements,
wherein in a first mode the method comprises simultaneously engaging the two clutches to provide a direct driving relationship between the input shaft and the output shaft whilst disconnecting the drive connection;
**characterised in that** in the epicyclic gearing two compound planets (16, 17) co-rotate in unison at all times, the planets forming the first and second gear elements, act as inputs to the epicyclic gearing and engage respective sun gears (20, 21) on the input shaft, wherein in other modes the two clutches are alternatively engaged to drive the planets via their respective sun gear from the input shaft.

2. A method according to Claim 1, wherein the epicyclic gearing further comprises a third compound planet (18) forming the third gear element, acts as the output and engages a respective sun gear (22) on the output shaft, the epicyclic gearing further comprising a carrier (19) for the planets forming the fourth gear element.

3. A method according to Claim 1, wherein the epicyclic gearing further comprises a carrier (419) for the planets forming the third gear element, connectable to the output shaft, and an annulus gear (403) forming the fourth gear element.

4. A method according to any preceding claim, in which the continuously variable drive connection is a variable hydraulic pump/motor circuit (25, 26).

5. A method according to Claim 4, wherein a bypass valve is provided in the circuit and wherein said step of disconnecting the drive connection includes opening the bypass valve which serves to open the hydraulic connection between pressure lines connecting the pump and the motor.

6. A method according to Claim 4, wherein said step of disconnecting the drive connection includes controlling the speed of the motor so that the output shaft thereof rotates at synchronous speed with the fourth gear element. A

7. A method according to any one of Claims I to 3 in which the continuously variable drive connection is a variable ratio mechanical drive.

8. A method according to any one of Claims 1 to 3 in which the continuously variable drive connection is a variable ratio electrical generator/motor combination.

## Patentansprüche

1. Verfahren zum Betreiben eines leistungsverzweigten Getriebes (10) mit einer Eingangswelle (11) und einer Ausgangswelle (23);
einem epizyklischen Getriebe oder Planetengetriebe (13) mit mindestens einem ersten, mindestens einem zweiten und mindestens einem dritten Getriebeelement (16, 17, 18), die jeweils entweder mit der Eingangswelle oder der Ausgangswelle verbindbar sind, wobei die Eingangswelle und die Ausgangswelle jeweils mit zumindest einem von dem ersten, zweiten und dritten Getriebeelement verbindbar sind;
einer Antriebsverbindung (24) zwischen einem vierten Getriebeelement (19) des epizyklischen Getriebes oder Planetengetriebes und der Eingangswelle, wobei die Verbindung dem Antrieb des vierten Getriebeelements von der Eingangswelle auf kontinuierlich veränderbare Weise zur Bereitstellung eines CVT dient;
zwei hydraulisch betriebenen Kupplungen (C1, C2), die von einer gemeinsamen Welle antreibbar sind und jeweils verbindbar sind mit einem zugeordneten ersten, zweiten oder dritten Getriebeelement,
wobei in einem ersten Betriebsmodus das Verfahren das simultane Einrücken der beiden Kupplungen aufweist zur Bereitstellung einer Direktantriebsbeziehung oder -verbindung zwischen der Eingangswelle und der Ausgangswelle, während die Antriebsverbindung getrennt wird oder ist,
**dadurch gekennzeichnet, dass** das epizyklische Getriebe oder Planetengetriebe zwei Stufenplaneten (16, 17) besitzt, die ständig gemeinsam rotieren, wobei die Stufenplaneten, die das erste und zweite Getriebeelement bilden, als Eingänge für das epizyklische Getriebe oder Planetengetriebe wirken und eingreifen in zugeordnete Sonnenräder (20, 21) auf der Eingangswelle und wobei in mindestens einem anderen Betriebsmodus die zwei Kupplungen alternativ eingerückt werden zum Antreiben der (Stufen-)Planeten über das jeweilige zugeordnete Sonnenrad von der Eingangswelle.

2. Verfahren nach Anspruch 1, **dadurch gekennzeichnet, dass** das epizyklische Getriebe oder Planetengetriebe einen dritten Stufenplaneten (18) aufweist, der das dritte Getriebeelement bildet und als Ausgang wirkt und eingreift in ein zugeordnetes Sonnenrad (22) auf der Ausgangswelle, wobei das epizyklische Getriebe oder Planetengetriebe einen Träger oder Steg (19) für die Planeten besitzt, der das vierte Getriebeelement bildet.

3. Verfahren nach Anspruch 1, **dadurch gekennzeichnet, dass** das epizyklische Getriebe oder Planetengetriebe einen Träger oder Steg (419) für die Planeten aufweist, der das dritte Getriebeelement bildet und verbindbar ist mit der Ausgangswelle, sowie ein Ringrad (403) aufweist, welches das vierte Getriebeelement bildet.

4. Verfahren nach einem der vorhergehenden Ansprüche, **dadurch gekennzeichnet, dass** die kontinuierlich veränderbare Antriebsverbindung ein veränderbarer hydraulischer PumpenMotor-Kreis (25, 26) ist.

5. Verfahren nach Anspruch 4, **dadurch gekennzeichnet, dass** ein Bypass-Ventil in dem Kreis vorgesehen ist und dass der Schritt des Trennens der Antriebsverbindung ein Öffnen des Bypass-Ventils aufweist, was dem Öffnen der hydraulischen Verbindung zwischen Druckleitungen dient, die die Pumpe und den Motor verbinden.

6. Verfahren nach Anspruch 4, **dadurch gekennzeichnet, dass** der Schritt des Trennens der Antriebsverbindung eine Steuerung, Regelung oder Überwachung der Drehzahl des Motors aufweist, so dass die Ausgangswelle mit synchroner Drehzahl zu dem vierten Getriebeelement rotiert.

7. Verfahren nach einem der Ansprüche 1 bis 3, **dadurch gekennzeichnet, dass** die kontinuierlich veränderbare Antriebsverbindung eine mechanische Antriebsverbindung mit variabler Übersetzung ist.

8. Verfahren nach einem der Ansprüche 1 bis 3, **dadurch gekennzeichnet, dass** die kontinuierlich veränderbare Antriebsverbindung eine elektrische Generator-Motor-Kombination mit veränderbarer Übersetzung ist.

## Revendications

1. Procédé de commande d'une transmission à dérivation de puissance (10) qui comprend :
un arbre d'entrée (11) et un arbre de sortie (23);
un train d'engrenage épicycloïdal (13) comportant des premier, deuxième et troisième éléments d'engrenage (16, 17, 18) chacun pouvant être couplé soit à l'arbre d'entrée soit à l'arbre de sortie, dans lequel l'arbre d'entrée et l'arbre de sortie peuvent être couplés à au moins à l'un des premier, deuxième et troisième éléments d'engrenage ;
une liaison d'entraînement (24) entre un quatrième élément d'engrenage (19) du train d'engrenage épicycloïdal et l'arbre d'entrée, la liaison servant à entraîner le quatrième élément d'engrenage à partir de l'arbre d'entrée d'une manière variable en continu afin de créer une transmission CVT ;
deux embrayages hydrauliques (C1, C2) qui peuvent être entraînés à partir d'un arbre commun et peuvent chacun être raccordés à certains respectifs des premier, deuxième et troisième éléments d'engrenage,
dans lequel, dans un premier mode, le procédé comprend le couplage simultané des deux embrayages afin d'assurer une relation d'entraînement directe entre l'arbre d'entrée et l'arbre de sortie tout en découplant la liaison d'entraînement ;
**caractérisé en ce que**, sur le train d'engrenage épicycloïdal, deux engrenages planétaires composés (16, 17) tournent simultanément à l'unisson à tout instant, les engrenages planétaires formant les premier et deuxième éléments d'engrenage, agissent en tant qu'entrée sur le train d'engrenage épicycloïdal et engrènent sur des roues solaires (20, 21) respectives sur l'arbre d'entrée, dans lequel, dans d'autres modes, les deux embrayages sont couplés de manière alternée afin d'entraîner les engrenages planétaires par l'intermédiaire de leur roue solaire respective à partir de l'arbre d'entrée.

2. Procédé selon la revendication 1, dans lequel le train d'engrenage épicycloïdal comprend, en outre, un troisième engrenage planétaire composé (18) formant le troisième élément d'engrenage, qui agit en tant que sortie et engrène avec la roue solaire (22) respective sur l'arbre de sortie, le train d'engrenage épicycloïdal comprenant, en outre, un support (19) pour les engrenages planétaires formant le quatrième élément d'engrenage.

3. Procédé selon la revendication 1, dans lequel le train d'engrenage épicycloïdal comprend, en outre, un support (419) pour les engrenages planétaires formant le troisième élément d'engrenage, pouvant être couplé à l'arbre de sortie , et un engrenage annulaire (403) formant le quatrième élément d'engrenage.

4. Procédé selon l'une quelconque des revendications précédentes, dans lequel la liaison d'entraînement variable en continu est un circuit moteur/pompe hydraulique variable (25, 26).

5. Procédé selon la revendication 4, dans lequel une vanne de contournement est agencée sur le circuit et dans lequel ladite étape de découplage de la liaison d'entraînement comporte l'ouverture de la vanne de contournement qui sert à ouvrir la liaison hydraulique entre les lignes de pression reliant la pompe et le moteur.

6. Procédé selon la revendication 4, dans lequel ladite étape de découplage de la liaison d'entraînement comporte la commande de la vitesse du moteur de telle sorte que son arbre de sortie tourne à une vitesse synchrone avec celle du quatrième élément d'engrenage.

7. Procédé selon l'une quelconque des revendications 1 à 3, dans lequel la liaison d'entraînement variable en continu est un entraînement mécanique à rapport variable.

8. Procédé selon l'une quelconque des revendications 1 à 3 dans lequel la liaison d'entraînement variable en continu est une association générateur/moteur électrique à rapport variable.
